# FASCICULE DE BREVET EUROPEEN

(11) **EP 0 810 507 B1**
(45) Date de publication et mention de la délivrance du brevet: **14.05.2003**
(21) Numéro de dépôt: 97410055.4
(22) Date de dépôt: 28.05.1997
(51) Int. Cl.: G06F 1/025

(54) **Procédé et dispositif programmable de génération d'impulsions de largeur variable**
Verfahren und programmierbares Gerät zum Erzeugen von Pulsen mit veränderlicher Breite
Method and programmable device for generating pulses having a variable width

(30) Priorité: 31.05.1996 FR 9606950
(43) Date de publication de la demande: 03.12.1997
(73) Titulaire: STMicroelectronics S.A., 92120 Montrouge (FR)
(72) Inventeur: Lusinchi, Laurent, 38120 Saint Egreve (FR); Prunier, Jacques, 38360 Sassenage (FR)
(74) Mandataire: de Beaumont, Michel

(56) Documents cités:
- EP-A- 0 540 949
- PATENT ABSTRACTS OF JAPAN vol. 010, no. 302 (E-445), 15 Octobre 1986 & JP 61 116994 A (MATSUSHITA ELECTRIC IND CO LTD), 4 Juin 1986,
- PATENT ABSTRACTS OF JAPAN vol. 017, no. 283 (E-1373), 31 Mai 1993 & JP 05 014186 A (MATSUSHITA ELECTRIC IND CO LTD), 22 Janvier 1993,

## Description

La présente invention concerne la génération d'impulsions au moyen d'un microprocesseur. L'invention concerne plus particulièrement la génération de trains d'impulsions de largeur variable, les largeurs respectives des impulsions étant programmables au moyen d'une unité centrale de traitement d'un microprocesseur. Une telle génération de trains d'impulsions sert, par exemple, dans des télécommandes à infrarouge pour piloter des diodes d'émission infrarouges, la séquence selon laquelle sont générés les trains d'impulsion et/ou leur nombre d'impulsions constituant un code de commande propre à être décodé par un détecteur des signaux infrarouges émis.

Plus généralement, la présente invention s'applique à la génération d'impulsions de largeur variable dont la fréquence et le facteur de forme (largeur d'une impulsion rapportée à la période) sont programmables, pour chaque impulsion, au moyen d'un microprocesseur.

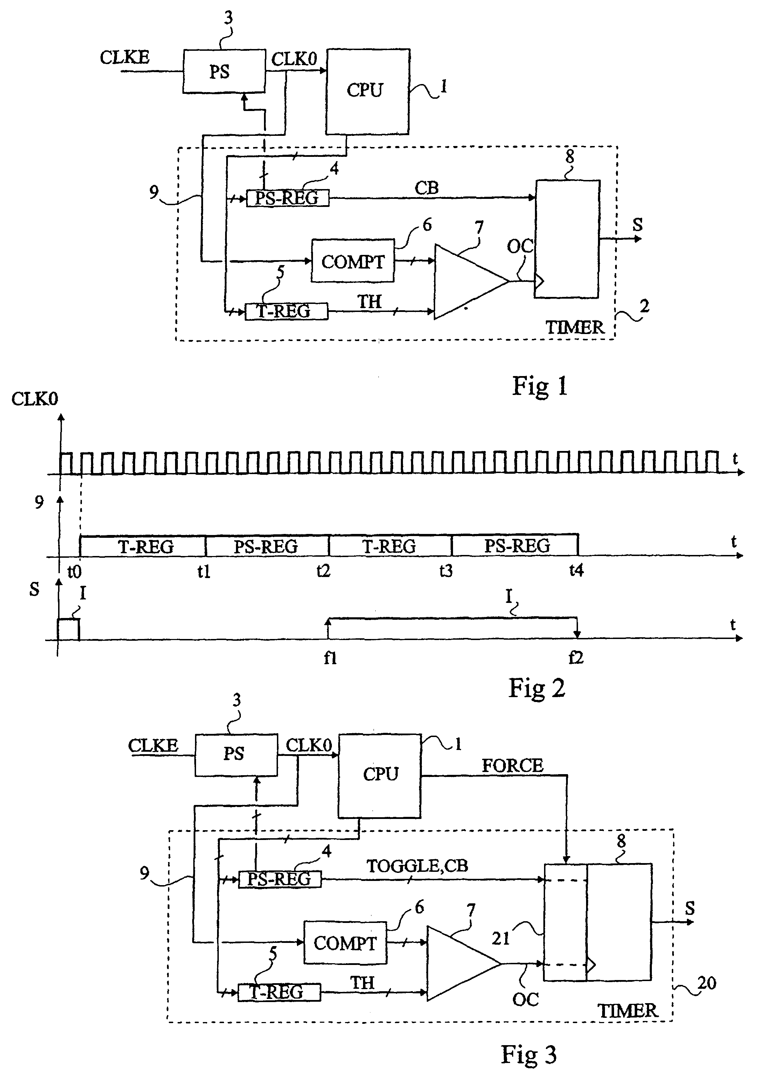

La figure 1 représente, partiellement et sous forme de schéma-bloc, un exemple de réalisation classique d'un générateur programmable d'impulsions.

Un tel générateur comporte une unité centrale de traitement (CPU) 1 chargée d'exécuter un programme d'instructions préalablement stocké dans une mémoire (non représentée). L'unité centrale de traitement 1 est classiquement associée à un compteur programmable (TIMER) 2 pouvant servir de base de temps, notamment pour des échanges entre le microprocesseur et un périphérique externe, par exemple, une diode d'émission infrarouge (non représentée).

L'unité centrale 1 est également associée à un diviseur de fréquence préliminaire (prescaler) 3 dont le rôle est de mettre en forme une horloge externe CLKE et de délivrer, notamment à l'unité 1 et au compteur programmable 2, une horloge de travail CLK0. Le cas échéant, la fréquence de comptage du compteur 2 est inférieure à la fréquence CLK0. Le diviseur PS 3 est programmable par l'intermédiaire d'un premier registre (PS-REG) 4 pour fixer le taux de division de l'horloge externe CLKE et, ainsi, la fréquence de travail de l'unité centrale 1.

Le compteur 2 est programmable, depuis l'unité centrale 1, par l'intermédiaire de certains bits du registre 4 et d'un deuxième registre (T-REG) 5.

L'unité 1 communique avec les registres 4 et 5 par l'intermédiaire d'au moins un bus 9 d'adresses, de données et de commande. Bien que cela n'ait pas été représenté pour des raisons de clarté, le ou les bus 9 servent également à échanger des informations entre l'unité centrale 1 et d'autres éléments classiques du microprocesseur ou qui lui sont associés (par exemple, des mémoires).

Outre les registres 4 et 5, le compteur programmable 2 comporte un compteur numérique 6, par exemple à base de bascules, dont la fréquence de comptage est donnée par le signal d'horloge CLK0. Le compteur numérique 6 est associé à un comparateur 7 qui compare la valeur délivrée par le compteur 6 avec un seuil TH enregistré dans le registre 5. Un signal OC de sortie du comparateur 7 est envoyé sur une entrée d'horloge d'une bascule de sortie 8 dont le rôle est de transférer l'état d'un signal CB, présent en entrée de la bascule 8 et délivré par le registre 4, sur une sortie de cette bascule à chaque front, par exemple montant, du signal OC. Lorsque le seuil TH est atteint, le compteur programmable 2 positionne le signal S de sortie de la bascule 8 dans un état haut ou bas selon l'état du bit CB.

Le compteur programmable 2 constituant une base de temps pour le microprocesseur, le compteur 6 compte généralement en permanence. L'obtention d'un front sur la sortie S consiste généralement à lire la valeur de comptage du compteur 6, par exemple, contenue dans le registre 5, puis à introduire dans le registre 5 un seuil de comptage TH correspondant à un différentiel de temps entre la date courante et une date souhaitée pour l'apparition du front. On désignera par initialisation du compteur numérique 6, pour les besoins de la présente description, l'instant auquel un nouveau seuil TH est disponible pour le comparateur 7.

La figure 2 illustre, sous forme de chronogrammes, le fonctionnement d'un générateur d'impulsions tel que représenté à la figure 1. La figure 2 représente un exemple de signal de sortie S de fréquence maximale en fonction d'un signal d'horloge CLK0 et de l'occupation du bus 9.

L'apparition d'un front montant ou descendant sur le signal S doit être précédée d'une programmation des registres 4 et 5 au moyen de l'unité 1. On commence par programmer le seuil TH dans le registre 5 (instants t0 à t1), puis on programme le bit CB dans le registre 4 (instants t1 à t2). L'initialisation du compteur 6 intervient à l'instant t1. Cependant, le seuil TH doit être suffisant pour qu'un front (par exemple, montant) du signal OC n'intervienne pas avant l'instant t2, faute de quoi le bit de contrôle n'est pas encore programmé et le front f1 (par exemple, montant) du signal de sortie n'est pas généré, la sortie S restant dans son état précédent. De même, un front suivant f2 (par exemple, descendant) ne peut intervenir qu'après deux cycles de programmation des registres, respectivement 4 et 5 (instants t2 à t3 et instants t3 à t4).

L'intervalle minimum entre deux fronts successifs du signal S, c'est-à-dire la largeur minimale d'une impulsion I, est donc conditionné par le temps nécessaire pour effectuer deux cycles de programmation (des registres 4 et 5) au moyen de l'unité 1. Dans l'exemple représenté, on considère que six cycles de l'horloge CLK0 sont nécessaires pour effectuer la programmation d'un registre. Ainsi, la largeur minimale d'une impulsion I est ici de douze cycles de l'horloge CLK0. De même, l'écart minimum entre deux impulsions successives correspond à douze cycles d'horloge. Par conséquent, la période minimale des impulsions correspond, dans un générateur classique tel que représenté à la figure 1, à quatre cycles de programmation (des registres 4 et 5), par exemple, 24 cycles de l'horloge CLK0. En outre, lorsque la période des impulsions est minimale, le facteur de forme des impulsions est obligatoirement de 50%.

La présente invention vise à proposer un nouveau procédé et dispositif programmable de génération d'impulsions qui permette de réduire la largeur minimale et la période minimale des impulsions pour une fréquence d'horloge donnée et une durée de cycle de programmation des registres donnée.

La présente invention vise également à ce que le facteur de forme des impulsions générées à la fréquence maximale puisse être différent de 50%.

Pour atteindre ces objets, la présente invention prévoit un procédé de génération d'impulsions au moyen d'un microprocesseur comportant une unité centrale de traitement et un compteur programmable au moyen d'au moins un bit de contrôle et d'un seuil de comptage, consistant :
à générer un premier front d'une impulsion en provoquant un forçage inconditionnel de l'état d'un signal de sortie dudit compteur vers un état correspondant à un état dudit bit de contrôle ; et
à générer un deuxième front de ladite impulsion par basculement de l'état dudit signal de sortie à l'issue dudit seuil de comptage.

Selon un mode de réalisation de la présente invention, ledit forçage de la sortie du compteur programmable est provoqué par l'apparition d'un front déterminé sur un signal de forçage généré par ladite unité centrale de traitement, ledit bit de contrôle étant contenu dans un premier registre.

Selon un mode de réalisation de la présente invention, ledit basculement dudit signal de sortie est provoqué par un changement d'état en sortie d'un comparateur entre une valeur de comptage et ledit seuil de comptage contenu dans un deuxième registre.

La présente invention prévoit également un générateur d'impulsions comportant un microprocesseur pourvu d'une unité centrale de traitement et d'un compteur programmable, dans lequel ledit compteur programmable comporte un circuit de basculement pourvu d'un multiplexeur dont une première entrée reçoit ledit bit de contrôle et dont une deuxième entrée est reliée à une sortie inversée d'une bascule délivrant ledit signal de sortie, une sortie dudit multiplexeur étant reliée à une entrée non-inverseuse de ladite bascule.

Selon un mode de réalisation de la présente invention, une combinaison logique de type OU, entre ledit signal de forçage et un signal indiquant que ledit seuil de comptage est atteint, est envoyée sur une entrée d'horloge de ladite bascule.

Selon un mode de réalisation de la présente invention, ledit multiplexeur est commandé par une combinaison logique d'un signal de forçage inconditionnel généré par ladite unité centrale de traitement et d'un signal d'activation dudit circuit de basculement, ledit multiplexeur sélectionnant sa deuxième entrée uniquement lorsque ledit signal d'activation est dans un état actif et que ledit signal de forçage est dans un état inactif.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente, sous forme de schéma-bloc, un mode de réalisation d'un générateur d'impulsions selon la présente invention ;
la figure 4 illustre, sous forme de chronogrammes, un mode de mise en oeuvre du procédé de génération d'impulsions selon la présente invention ; et
la figure 5 représente schématiquement un mode de réalisation d'un circuit de basculement du générateur d'impulsions représenté à la figure 3.

Pour des raisons de clarté, les mêmes éléments ont été désignés par les mêmes références aux différentes figures. Pour les mêmes raisons, seuls les éléments du générateur qui sont nécessaires à la compréhension de l'invention ont été représentés aux figures et seront décrits par la suite.

La figure 3 représente, sous forme de schéma-bloc, un générateur d'impulsions selon un mode de réalisation de la présente invention. Le générateur comporte, comme précédemment, une unité centrale de traitement 1, un diviseur de fréquences préliminaire 3 et un compteur programmable 20.

Le compteur programmable 20 comporte, comme précédemment, un compteur numérique 6, par exemple à base de bascules (non représentées), un comparateur 7, une bascule de sortie 8 et deux registres, respectivement 4 et 5.

Une caractéristique de la présente invention est de prévoir une nouvelle fonction au sein du compteur programmable. Cette fonction consiste à configurer le compteur 20 pour forcer, de manière inconditionnelle par rapport à un seuil de comptage TH, le positionnement de l'état d'un signal de sortie S délivré par la bascule 8 à l'état d'un bit de contrôle CB contenu dans le registre 4, et d'inverser l'état du signal S lorsque le seuil TH est atteint.

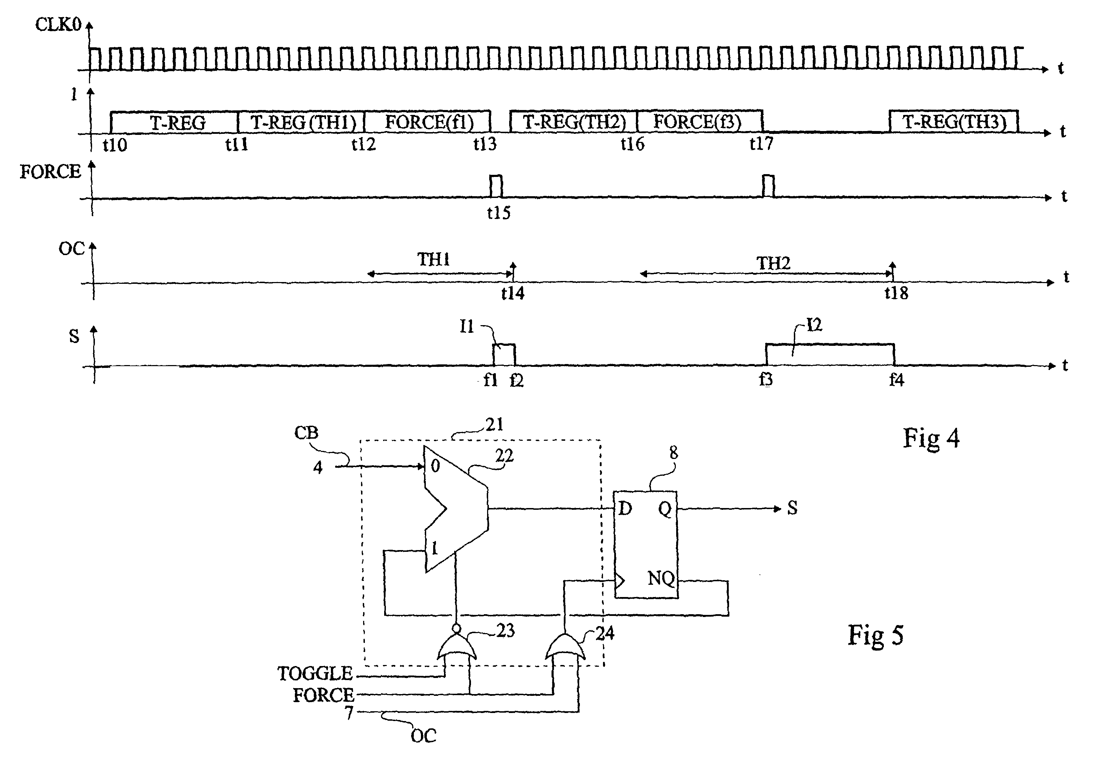

Selon la présente invention, la bascule 8 est associée à un circuit 21 de basculement, dont un mode de réalisation détaillé sera décrit par la suite en relation avec la figure 5. Ce circuit 21 a pour rôle de mettre en oeuvre la nouvelle fonction décrite ci-dessus lorsqu'un bit de configuration TOGGLE, par exemple contenu dans le registre 4, est actif. Le basculement est activé par un état déterminé d'un signal TOGGLE délivré au circuit 21 ; l'apparition d'une instruction de forçage (signal FORCE) délivrée directement par l'unité centrale 1 au circuit 21 positionne le bit CB en entrée de la bascule 8 et la déclenche, indépendamment de l'état du signal OC de sortie du comparateur 7.

Le recours au signal FORCE ne nécessite pas de connexion supplémentaire entre l'unité 1 et le compteur 20. En effet, les compteurs programmables classiques reçoivent généralement un signal programmable de déclenchement de la bascule 8. Selon l'invention, ce signal programmable constitue le signal FORCE. De même, comme le bit TOGGLE est contenu dans un registre accessible au moyen du bus 9, il ne nécessite aucune connexion supplémentaire entre l'unité 1 et le compteur 20.

Une caractéristique de la présente invention est que le contenu du registre 5 est désormais utilisé pour déclencher un seul des deux fronts d'une impulsion, l'autre front étant déclenché par l'apparition du signal FORCE.

Le bit de contrôle CB est donc désormais utilisé pour fixer un seul des états du signal de sortie S délivré par le compteur programmable 20, l'autre état étant obtenu par basculement à l'issue du comptage opéré par le compteur numérique 6. Ainsi, le registre 4 est, selon l'invention, programmé une seule fois, par exemple, lors d'une initialisation d'un programme de génération d'un train d'impulsions, pour fixer l'état du bit CB, et n'est pas modifiée pendant toute la génération du train d'impulsions.

La figure 4 illustre un mode de mise en oeuvre du procédé selon la présente invention au moyen d'un générateur tel que représenté à la figure 3. La figure 4 représente, sous forme de chronogrammes, les signaux CLK0, FORCE, OC et S, ainsi que l'occupation de l'unité centrale 1 pour ce qui concerne la programmation des registres 4 et 5 et la génération des instructions de forçage, dans un exemple de génération d'un train d'impulsions.

Selon l'invention, on commence (instants t10 à t11) par programmer le bit TOGGLE dans son état actif et l'état du bit CB dans le registre 4. Puis, on programme un premier seuil de comptage TH1 dans le registre 5 (instants t11 à t12). Comme précédemment, l'initialisation du compteur 6 intervient à l'instant t12 où le seuil TH1 est programmé. Dans l'exemple représenté, le début de la programmation du registre 5 intervient dès que possible. On notera cependant que l'instant de début de programmation du seuil TH1 peut être retardé selon la période d'impulsion souhaitée.

Dans l'exemple représenté à la figure 4, on suppose que le bit CB a été programmé dans un état haut. Un premier front montant du signal FORCE est envoyé par l'unité 1 à un instant t13. La génération du signal FORCE requiert un traitement par l'unité centrale 1. Ce traitement dure généralement un temps inférieur ou égal au temps de programmation d'un registre.

En supposant que le signal FORCE est actif à l'état haut, un premier front montant f1 d'une première impulsion I1 apparaît à l'instant t13. Le circuit de basculement 21 est, selon l'invention, un circuit câblé qui permet de transférer le bit CB de façon quasi-simultanée avec l'apparition d'un front montant du signal FORCE.

A un instant t14 où la valeur de comptage atteint le seuil TH1, le signal OC change d'état (par exemple, passe à l'état haut), ce qui provoque, selon l'invention, un basculement (front descendant f2) de l'état du signal S. De préférence, une impulsion du signal FORCE dure une demi-période du signal CLK0 (instants t13 à t15) pour permettre au signal S de changer d'état dès le front montant suivant du signal CLK0. La largeur minimale d'une impulsion correspond alors à une période du signal CLK0.

Le signal FORCE étant indépendant du comptage, on peut également prévoir que son front montant soit synchronisé avec un front descendant du signal CLK0, ce qui permet de ramener à une demi-période du signal CLK0, la largeur minimale d'une impulsion.

Dès l'instant t14, le registre 5 peut être reprogrammé avec un deuxième seuil de comptage TH2. Le compteur 6 peut donc être réinitialisé dès un instant t16 correspondant à la fin de cette reprogrammation qui dure, par exemple, six cycles de l'horloge CLK0.

Un nouveau forçage est programmé entre l'instant t16 et un instant t17. Un deuxième front montant du signal FORCE apparaît à l'instant t17 et provoque le passage à l'état haut du signal S (front f3) débutant ainsi une deuxième impulsion I2. L'impulsion I2 se termine (front f4) à l'issue du comptage de la valeur TH2 (instant t18) à partir duquel un nouveau seuil TH3 peut être programmé.

Un avantage de la présente invention est que les fronts montant et descendant d'une impulsion sont indépendants l'un de l'autre. Ainsi, la largeur d'une impulsion est décorrélée du seuil de comptage dans la mesure où l'apparition de son front montant ne dépend pas du compteur 6. La périodicité minimale des impulsions correspond, selon l'invention, sensiblement à la durée d'un cycle de programmation du registre 5 et d'un cycle de génération du signal FORCE. L'invention permet donc d'obtenir une fréquence correspondant sensiblement au double de la fréquence maximale des impulsions d'un générateur classique, lorsque les impulsions générées présentent une largeur minimale.

Un autre avantage de la présente invention est que, pour une fréquence donnée des impulsions, elle permet de diminuer la fréquence de travail du microprocesseur et, par ce biais, de minimiser sa consommation. Cet avantage est particulièrement sensible pour des applications fonctionnant sur piles, par exemple, des télécommandes à infrarouge.

Si le bit CB est programmé dans un état bas, on obtient un signal S inversé par rapport à la représentation de la figure 4. On obtient donc une inversion du facteur de forme par rapport au cas où le bit CB est programmé dans un état haut.

La figure 5 représente un mode de réalisation d'un circuit de basculement 21 selon la présente invention.

Ce circuit comporte un multiplexeur 22 à deux entrées dont une sortie est reliée à une entrée D de la bascule 8. Une première entrée du multiplexeur 22 reçoit le bit de contrôle CB délivré par le registre 4. Une deuxième entrée du multiplexeur 22 reçoit une sortie inversée NQ de la bascule 8. Le signal S de sortie du compteur programmable 20 est délivré par une sortie non-inversée Q de la bascule 8.

La sélection de l'entrée du multiplexeur 22 est, par exemple, effectuée au moyen d'une combinaison logique de type NON(OU) 23 des signaux TOGGLE et FORCE. Dans cet exemple, le signal TOGGLE est actif à l'état bas tandis que le signal FORCE est actif à l'état haut.

Le signal FORCE est également combiné dans une porte OU 24 avec le signal OC pour permettre un forçage inconditionnel par rapport à la valeur de comptage.

A l'instant t13 (figure 4) où le signal FORCE passe à l'état haut, la sortie de la porte 23 est à l'état bas. Ainsi, le multiplexeur 22 sélectionne sa deuxième entrée et le signal de sortie S est positionné à l'état haut.

A l'instant t15, l'impulsion de forçage disparaît et le multiplexeur 22 sélectionne alors sa deuxième entrée, c'est-à-dire la sortie NQ de la bascule 8, dans la mesure où le signal TOGGLE est à l'état bas, la fonction de basculement ayant été activée. Le signal S bascule donc dès que le signal de sortie du compteur 7 passe à l'état haut (instant t14).

Lorsque le signal TOGGLE est dans un état haut (inactif), la fonction de basculement du compteur 20 est désactivée et il fonctionne alors de manière classique.

Un avantage de la présente invention est qu'elle permet un fonctionnement classique du compteur 20, ce qui est particulièrement avantageux dans la mesure où cela ne perturbe pas le déroulement d'autres programmes classiques éventuels utilisant la base de temps constituée par le compteur 20.

Tout comme dans un circuit classique où le programme exécuté par l'unité 1 détermine les instants t0 à t3 de déclenchement des programmations des registres 4 et 5 pour fixer la largeur et la période d'une impulsion, les instants t11 et t12 (t14 et t16) de déclenchement de la programmation du registre 5 et d'un forçage inconditionnel dépendent du programme exécuté par l'unité centrale 1.

Bien entendu, la présente invention est susceptible de diverses variantes et modifications qui apparaîtront à l'homme de l'art. En particulier, la réalisation pratique du circuit de basculement 21 pourra être modifiée en fonction des états, respectivement actifs et inactifs, des signaux FORCE et TOGGLE.

## Revendications

1. Procédé de génération d'impulsions au moyen d'un microprocesseur comportant une unité centrale de traitement (1) et un compteur (20) programmable au moyen d'au moins un bit de contrôle (CB) et d'un seuil de comptage (TH), **caractérisé en ce qu'**il consiste :
à générer un premier front (f1, f3) d'une impulsion (I) en provoquant un forçage inconditionnel de l'état d'un signal de sortie (S) dudit compteur (20) vers un état correspondant à un état dudit bit de contrôle (CB) ; et
à générer un deuxième front (f2, f4) de ladite impulsion (I) par basculement de l'état dudit signal de sortie (S) à l'issue dudit seuil de comptage (TH).

2. Procédé selon la revendication 1, **caractérisé en ce que** ledit forçage de la sortie (S) du compteur programmable (20) est provoqué par l'apparition d'un front déterminé sur un signal de forçage (FORCE) généré par ladite unité centrale de traitement (1), ledit bit de contrôle (CB) étant contenu dans un premier registre (4).

3. Procédé selon la revendication 2, **caractérisé en ce que** ledit basculement dudit signal de sortie (S) est provoqué par un changement d'état en sortie d'un comparateur (7) entre une valeur de comptage et ledit seuil de comptage (TH) contenu dans un deuxième registre (5).

4. Générateur d'impulsions comportant un microprocesseur pourvu d'une unité centrale de traitement (1) et d'un compteur programmable (20), **caractérisé en ce qu'**il comporte des moyens pour mettre en oeuvre le procédé selon l'une quelconque des revendications 1 à 3.

5. Générateur selon la revendication 4, **caractérisé en ce que** ledit compteur programmable (20) comporte un circuit de basculement (21) pourvu d'un multiplexeur (22) dont une première entrée reçoit ledit bit de contrôle (CB) et dont une deuxième entrée est reliée à une sortie inversée (NQ) d'une bascule (8) délivrant ledit signal de sortie (S), une sortie dudit multiplexeur (22) étant reliée à une entrée non-inverseuse (D) de ladite bascule (8).

6. Générateur selon la revendication 5, **caractérisé en ce qu'**une combinaison logique de type OU, entre ledit signal de forçage (FORCE) et un signal (OC) indiquant que ledit seuil de comptage (TH) est atteint, est envoyée sur une entrée d'horloge de ladite bascule (8).

7. Générateur selon la revendication 6, **caractérisé en ce que** ledit multiplexeur (22) est commandé par une combinaison logique d'un signal (FORCE) de forçage inconditionnel généré par ladite unité centrale de traitement (1) et d'un signal (TOGGLE) d'activation dudit circuit de basculement (21), ledit multiplexeur (22) sélectionnant sa deuxième entrée uniquement lorsque ledit signal d'activation (TOGGLE) est dans un état actif et que ledit signal de forçage (FORCE) est dans un état inactif.

## Claims

1. A method for generating pulses by means of a microprocessor including a CPU (1) and a counter (20) programmable by means of at least one control bit (CB) and of a counting threshold (TH), **characterized in that** it consists of:
generating a first edge (f1, f3) of a pulse (I) by unconditionally forcing the state of an output signal (S) of the counter (20) to a state corresponding to a state of the control bit (CB) ; and
generating a second edge (f2, f4) of the pulse (I) by switching the state of the output signal (S) at the end of the counting threshold (TH).

2. A method according to claim 1, **characterized in that** the forcing of the output (S) of the programmable counter (20) is caused by the occurrence of a determined edge on a forcing signal (FORCE) generated by the CPU (1), the control bit (CB) being contained in a first register (4).

3. A method according to claim 2, **characterized in that** the switching of the output signal (S) is caused by a state switching at the output of a comparator (7) between a counting value and the counting threshold (TH) contained in a second register (5).

4. A pulse generator including a microprocessor provided with a CPU (1) and a programmable counter (20), **characterized in that** it includes means for implementing the method according to any of claims 1 to 3.

5. A generator according to claim 4, **characterized in that** the programmable counter (20) includes a switching circuit (21) having a multiplexer (22), a first input of which receives the control bit (CB) and a second input of which is connected to an inverted output (NQ) of a flip-flop (8) issuing the output signal (S), an output of the multiplexer (22) being connected to a non-inverting input (D) of the flip-flop (8).

6. A generator according to claim 5, **characterized in that** a logic OR-type combination, between the forcing signal (FORCE) and a signal (OC) indicating that the counting threshold (TH) has been reached, is sent on a clock input of the flip-flop (8).

7. A generator according to claim 6, **characterized in that** the multiplexer (22) is controlled by a logic combination of an unconditional forcing signal (FORCE) generated by the CPU (1) and of a signal (TOGGLE) for activating the switching circuit (21), the multiplexer (22) selecting its second input only when the activation signal (TOGGLE) is in an active state and the forcing signal (FORCE) is in an inactive state.

## Patentansprüche

1. Verfahren zum Erzeugen von Pulsen mittels eines Mikroprozessors, der eine CPU (1) und einen Zähler (20) aufweist, die zumindest mittels eines Kontrollbits (CB) und eines Zählschwellenwerts (TH) programmierbar sind, **dadurch gekennzeichnet, dass** es die folgenden Schritte aufweist:
Erzeugen einer ersten Kante (f1, f3) eines Pulses (I) durch unkonditionales Erzwingen des Zustands eines Ausgangssignals (S) des Zählers (20) in einen Zustand, der einem Zustand des Kontrollbits (CB) entspricht; und
Erzeugen einer zweiten Kante (f2, f4) des Pulses (I) durch Umschalten des Zustands des Ausgangssignals (S) am Ende des Zählschwellenwerts (TH).

2. Verfahren nach Anspruch 1, **dadurch gekennzeichnet, dass** das Erzwingen des Ausgangs (S) des programmierbaren Zählers (20) bewirkt wird durch das Auftreten einer bestimmten Kante auf einem Erzwingungssignal (FORCE) das durch die CPU (1) erzeugt wird, wobei das Kontrollbit (CB) in einem ersten Register (4) enthalten ist.

3. Verfahren nach Anspruch 2, **dadurch gekennzeichnet, dass** das Umschalten des Ausgangssignals (S) bewirkt wird durch einen Zustand, der den Ausgang eines Vergleichers (7) zwischen einem Zählwert und dem Zählschwellenwert (TH) schaltet, der in einem zweiten Register (5) enthalten ist.

4. Pulsgenerator, der einen Mikroprozessor aufweist, der mit einer CPU (1) und einem programmierbaren Zähler (20) versehen ist, **dadurch gekennzeichnet, dass** er Mittel für das Implementieren des Verfahrens gemäß einem der Ansprüche 1 bis 3 aufweist.

5. Generator nach Anspruch 4, **dadurch gekennzeichnet, dass** der programmierbare Zähler (20) einen Umschaltschaltkreis (21) mit einem Multiplexer (22) aufweist, wobei ein erster Eingang des selben das Kontrollbit (CB) empfängt und ein zweiter Eingang des selben mit einem invertierten Eingang (NQ) eines Flip-Flop (8) verbunden ist, der ein Ausgangssignal (S) ausgibt, wobei ein Ausgang des Multiplexers (22) mit einem nicht-invertierenden Eingang (D) des Flip-Flop (8) verbunden ist.

6. Generator nach Anspruch 5, **dadurch gekennzeichnet, dass** eine logische ODER-Typ-Kombination zwischen dem Erzwingungssignal (FORCE) und einem Signal (OC), das anzeigt, dass der Zählschwellenwert (TH) erreicht wurde, an einen Taktungseingang des Flip-Flop (8) gesendet wird.

7. Generator nach Anspruch 6, **dadurch gekennzeichnet, dass** der Multiplexer (22) durch eine logische Kombination eines nicht-konditionalen Erzwingungssignals (FORCE), das durch die CPU (1) erzeugt wird, und eines Signals (TOGGLE) für das Aktivieren des Umschaltungsschaltkreises (21) gesteuert wird, wobei der Multiplexer (22) seinen zweiten Eingang nur dann wählt, wenn das Aktivierungssignal (TOGGLE) in einem aktiven Zustand ist und das Erzwingungssignal (FORCE) in einem inaktiven Zustand ist.
